# FASCICULE DE BREVET EUROPEEN

(11) **EP 2 008 847 B1**
(45) Date de publication et mention de la délivrance du brevet: **23.12.2009**
(21) Numéro de dépôt: 08159133.1
(22) Date de dépôt: 26.06.2008
(51) Int. Cl.: B60J 7/00

(54) **Store à enrouleur à moyens de ralentissement de l'enroulement, et véhicule correspondant**
Rollo mit Mitteln zur Verlangsamung der Aufwicklung und entsprechendes Beförderungsmittel
Roll-up blind with means for slowing the winding process and corresponding vehicle

(30) Priorité: 26.06.2007 FR 0756049; 13.09.2007 FR 0757548
(43) Date de publication de la demande: 31.12.2008
(73) Titulaire: Wagon SAS, 79302 Bressuire Cédex (FR)
(72) Inventeur: Chemineau, Nicolas, 85310, Chaille sous les Ormeaux (FR); Neaux, Jean-Claude, 79300, Terves (FR); Thibeaudeau, Daniel, 79300, Terves (FR); Dubouilh, Gilles, 47400, Fauguerolles (FR)
(74) Mandataire: Bioret, Ludovic

(56) Documents cités:
- EP-A- 1 112 876
- DE-A1- 4 320 393
- DE-A1- 10 163 122
- DE-A1-102006 004 139
- DE-A1-102006 023 813
- DE-B3-102005 048 207
- DE-U1-202007 005 531

## Description

Le domaine de l'invention est celui des stores à enrouleur, notamment pour véhicules automobiles. Plus précisément, l'invention concerne l'optimisation des opérations de repliement et/ou déploiement de la toile d'un store à enrouleur dont les mouvement sont motorisés.

Classiquement, voir par example le document DE 101 63 122, les stores à enrouleur comprennent un tube d'enroulement, ou tube enrouleur, sur lequel la toile d'occultation est montée. Ce tube est sollicité par un couple de rappel qui tend à enrouler la toile autour du tube, de façon, d'une part à tendre la toile lorsque celle-ci est déployée et, d'autre part à aider à l'enroulement, ou repliement, du rideau. Ce dernier permet de ramener l'extrémité libre de celui-ci, généralement équipé d'une barre de tirage, jusqu'aux bords d'une fente au travers de laquelle la toile peut circuler.

Cette fente est par exemple ménagée soit dans un boîtier dans lequel le tube d'enroulement est monté en rotation, soit directement dans la garniture habillant l'intérieur du véhicule, le store étant monté à l'intérieur de celle-ci, ou encore dans (ou sous) la tablette arrière du véhicule.

De façon classique, le couple de rappel est engendré par un ressort à spires hélicoïdales ou par un ressort à boudin. Ce ressort s'étend à l'intérieur du tube d'enroulement et est solidarisé par l'une de ses extrémités au tube, et par son autre extrémité à un élément de structure fixe, solidaire du boîtier ou du bâti sur lequel est monté le tube d'enroulement.

Ce couple de rappel doit être suffisamment important pour tendre la toile, pour permettre un enroulement complet de la toile, et pour plaquer la barre de tirage contre son support, lorsque le store est replié, de façon à éviter des chocs et des bruits intempestifs lorsque le véhicule est en mouvement.

Certains de ces stores enrouleurs ont un déploiement et un enroulement motorisés. Dans ce cas, classiquement, les extrémités de la barre de tirage coulissent dans des rails. Des câbles circulant dans ces rails et liés aux extrémités de la barre de tirage, permettent de tirer ou de pousser celle-ci dans une direction ou dans l'autre. Un moteur, généralement électrique, agit sur ces câbles de façon à tirer ou pousser la barre de tirage de façon équilibrée à ses deux extrémités. De façon classique, un moto-réducteur peut être utilisé en sortie du moteur électrique.

Ainsi, le moteur électrique permet d'actionner le déploiement ou l'enroulement du store à enrouleur en agissant sur sa barre de tirage. Dans le sens du déploiement de la toile, ce moteur doit agir contre l'action du couple de rappel engendré par le ressort situé dans le tube enrouleur. En revanche, lors des opérations d'enroulement, l'action engendrée par le moteur va dans le même sens que le couple de rappel. La charge à laquelle est soumis le moteur électrique est donc beaucoup plus faible dans le sens de l'enroulement que dans le sens du déploiement du store.

Selon les cas, le couple de rappel peut être suffisant pour ramener seul la barre de tirage en enroulant la toile ou, au contraire, être insuffisant pour contrer les forces de frottement des extrémités de la barre de tirage dans les rails.

Si la force du couple de rappel est insuffisante, le moteur, en agissant sur la barre de tirage par l'intermédiaire des câbles, tire la barre de tirage afin d'assurer l'enroulement des stores. Le ressort du couple de rappel sert alors essentiellement à maintenir la toile tendue pendant son enroulement. Si au contraire, la force engendrée par le couple de rappel est supérieure aux forces de frottement aux extrémités de la barre de tirage, le moteur, qui sera actionné pour enrouler la toile, va alors tourner à vide. Il risque alors de s'emballer, en produisant un bruit désagréable dû à l'excitation des jeux du moteur, et en risquant de chauffer de façon excessive.

Il est à noter que l'action des ressorts de rappel situés dans le boîtier su store est généralement linéaire. Plus le store est déployé, plus la force exercée par ces ressorts est importante. Quand le store est entièrement déployé, cette force peut être de l'ordre de 100 N. Il peut donc y avoir, lors de l'enroulement du store, plusieurs phases. Une première phase, pendant laquelle les forces du ressort de rappel seront supérieures aux forces de frottement des extrémités de la barre de tirage dans les rails, une seconde phase, dans laquelle ces forces seront sensiblement équilibrées, et une troisième phase, durant laquelle les forces de rappel seront inférieures aux forces de frottement et où l'effort du moteur sera nécessaire pour terminer l'enroulement.

Cette configuration peut donc entraîner, dans les première et seconde phase, d'une part des bruits désagréables lorsque le moteur travaille hors charge et tourne donc à une vitesse excessive et d'autre part, un risque de détérioration du moteur. Elle peut également entraîner des bruits non réguliers du moteurs, suivant que celui ci travaille avec une charge plus ou moins importante.

Une solution envisageable pour éviter de tels inconvénients, pourrait être de réduire la force du ressort situé dans le tube d'enroulement. Cependant, une telle action aurait pour effet de détériorer l'aspect tendu du store quand celui-ci est déployé. Un ressort important dans l'enrouleur est donc nécessaire, surtout lorsque la surface de toile à déployer est importante, quand le store n'est pas déployé de façon verticale, ou quand la toile est particulièrement lourde.

Le document DE-20 2007 005531 propose une autre solution, consistant à associer à des patins de guidage d'une barre de tirage dans des rails une lame ressort, dont la forme particulière génère un frottement dans les rails lors du repli de la toile, visant à s'opposer au repli. Cependant, cette approche est complexe à mettre en oeuvre et à régler, du fait de la forme du ressort et de son association au patin, et génère des bruits de frottement inacceptables. De plus, des frottements, plus faibles, existent également lors du déploiement de la toile, ce qui n'est bien sur pas souhaitable.

L'invention a notamment pour objectif de pallier ces inconvénients de l'art antérieur.

Plus précisément, l'invention a pour objectif de proposer un store enrouleur qui permette d'éviter, ou à tout le moins limiter, les problèmes liés à l'enroulement trop rapide du store, tout en conservant une tension suffisante des moyens de rappel.

L'invention a également pour objectif de fournir un tel store dont le moteur fonctionne de façon plus régulière.

Plus précisément, l'invention a pour objectif de fournir un store faisant le moins de bruit possible lors de son déploiement et de son enroulement, et dont le bruit soit le plus régulier possible.

Un autre objectif de l'invention est de limiter le risque de détérioration du moteur électrique d'un tel store, et de permettre un dimensionnement plus économique de ce moteur.

Un objectif particulier de l'invention est de permettre de limiter la consommation d'énergie par le store lors de son déploiement et de son enroulement.

L'invention a également pour objectif d'éviter les vibrations ou les à-coups lors des déplacements de la barre de tirage du store, et de maintenir homogène la vitesse de ces déplacements.

L'invention a aussi pour objectif de fournir un tel store qui soit simple à fabriquer et facile à mettre en oeuvre, et dont la fabrication n'engendre pas de surcoûts importants.

Ces objectifs ainsi que d'autres qui apparaîtront par la suite, sont atteints grâce à un store à enrouleur pour véhicule automobile, comprenant une toile d'occultation solidaire à une première extrémité d'un tube d'enroulement portant des premiers moyens de rappel de la toile dans une position dans laquelle la toile est enroulée, et à une deuxième extrémité d'une barre de tirage, les extrémités de cette barre de tirage étant guidées en coulissement dans des rails lors du déplacement de la toile et entraînées par des moyens d'actionnement motorisés de la barre de tirage, comprenant au moins un élément de câble.

Selon l'invention, ce store comprend des moyens de ralentissement agissant sur au moins un desdits éléments de câble, de façon à s'opposer au déplacement de la barre de tirage lors de l'enroulement de la toile.

Ainsi, l'enroulement du store est ralenti, lorsque la toile est repliée, ce qui permet d'éviter la détérioration du moteur et les bruits excessifs dus à un enroulement trop rapide. De plus, ce ralentissement se faisant au niveau des moyens d'actionnement de la barre de tirage a pour effet d'améliorer la tension de la toile d'occultation.

L'action, effectuée directement sur le ou les câbles, est simple à mettre en oeuvre, et efficace. Elle n'existe que dans le sens du repli, et il n'y a aucune interaction lors du déploiement.

De façon avantageuse, les moyens de ralentissement comprennent des moyens de frottement en contact avec au moins un élément des moyens d'actionnement motorisés.

Ces moyens de ralentissement permettent une mise en oeuvre très simple et peu onéreuse de l'invention.

De façon alternative, les moyens de ralentissement comprennent un ralentisseur à graisse.

Un tel ralentisseur permet d'appliquer un ralentissement parfaitement régulier et contrôlé à la barre de tirage.

Préférentiellement, les moyens de ralentissement sont agencés de façon à ne pas s'opposer au déplacement de la barre de tirage lors du déploiement de la toile.

Le ralentissement se produit alors uniquement lors de l'enroulement de la toile, ce qui a pour effet de ne pas augmenter la charge du moteur lors du déploiement de la toile. L'énergie nécessaire pour le déploiement n'est par conséquent pas augmentée, et la charge du moteur est mieux répartie entre les différentes phases de fonctionnement.

Selon l'un des modes de réalisation, le store comprend des moyens de liaison sélective entre les moyens d'actionnement motorisés et les moyens de ralentissement, assurant une liaison uniquement lors de l'enroulement de la toile.

Avantageusement, les moyens de liaison sélective comprennent un embrayage unidirectionnel.

Ce mode de réalisation permet une mise en oeuvre simple et efficace du ralentissement ne s'opposant au déplacement de la barre de tirage que lors de l'enroulement.

Selon un autre mode de réalisation, les moyens de ralentissement comportent des seconds moyens de rappel s'opposant à la force appliquée sur la toile par les premiers moyens de rappel.

Ce mode de réalisation permet d'une part de ralentir la barre de tirage lors de l'enroulement du store, et d'autre part de stocker l'énergie correspondant à ce ralentissement afin de la restituer lors du déploiement du store. Le moteur peut ainsi fonctionner de façon plus régulière, et sa charge maximum est réduite, ce qui entraîne une diminution de sa consommation d'énergie et la possibilité de la dimensionner de façon plus économique.

Avantageusement, le store à enrouleur selon l'invention est adapté pour au moins une des utilisations parmi l'occultation d'une vitre latérale d'un véhicule automobile, l'occultation d'une lunette arrière d'un véhicule automobile, l'occultation d'un pavillon vitré d'un véhicule automobile et le cache-bagage.

L'invention porte également sur un véhicule automobile comprenant au moins un store à enrouleur tel que décrit ci-dessus.

D'autres caractéristiques et avantages de l'invention apparaîtront plus clairement à la lecture de la description de trois modes de réalisation préférentiels de l'invention, donnés à titre d'exemples illustratifs et non limitatifs, et des dessins annexés parmi lesquels :
- la figure 1 est une vue de dessus d'un store à enrouleur motorisé auquel peut s'appliquer l'invention, dont la toile est en position enroulée ;
- la figure 2 est une vue de dessus du store à enrouleur de la figure 1, dont la toile est en position déployée ;
- la figure 3 est une vue de détail de dessus d'un mécanisme d'actionnement du store à enrouleur des figures 1 et 2, selon un des modes de réalisation de l'invention ;
- la figure 4 est une vue de détail de dessus d'un mécanisme d'actionnement du store à enrouleur des figures 1 et 2, selon un second mode de réalisation de l'invention ;
- la figure 5 est une vue d'un ralentisseur à graisse mis en oeuvre dans le mécanisme d'actionnement de la figure 4 ;
- la figure 6 est une vue de détail de dessous d'un mécanisme d'actionnement du store à enrouleur des figures 1 et 2, selon un troisième mode de réalisation de l'invention ;
- la figure 7 est une vue d'un ressort spiral mis en oeuvre dans le mécanisme d'actionnement de la figure 6.
- la figure 8 est une vue de coupe d'un mécanisme de maintien de l'arbre du moteur d'un mécanisme d'actionnement du store à enrouleur.
- la figure 9 est une vue d'une bride mise en oeuvre pour le maintien de l'arbre du moteur du mécanisme de la figure 8.
- la figure 10 est une vue de dessus d'un mécanisme d'actionnement du store à enrouleur équipé de la bride de la figure 9.

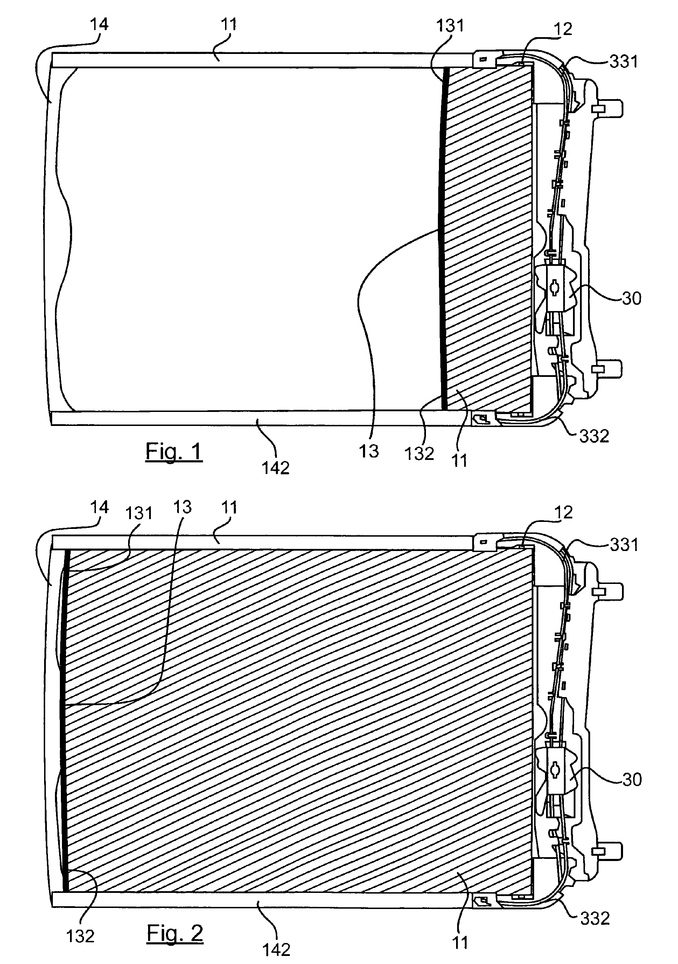

Les figures 1 et 2 illustrent un exemple d'un store à enrouleur dont le déploiement et l'enroulement sont motorisés. De façon plus précise, la figure 1 représente un tel store en position enroulée (ou dont la toile, ou toile occultante, ou toile d'occultation, est en position enroulée), et la figure 2 le représente en position déployée.

Sur ces figures, on peut voir une toile d'occultation 11 qui est enroulée sur un tube enrouleur 12. L'extrémité libre de cette toile d'occultation 11 est fixée à une barre de tirage 13.

Dans l'exemple présenté sur les figures 1 et 2, dans lequel le store est prévu pour se déployer de façon horizontale, le tube enrouleur 12 du store est fixé à un cadre 14 entourant la zone à occulter. Les portions latérales de ce cadre 14, entre lesquelles la toile 11 doit se déployer, portent des rails 141 et 142. Ces rails141 et 142, ou coulisses, sont prévus pour faire coulisser les extrémités, respectivement 131 et 132, de la barre de tirage 13, qui sont conformées en coulisseau de forme adaptée pour coulisser dans les rails 141 et 142.

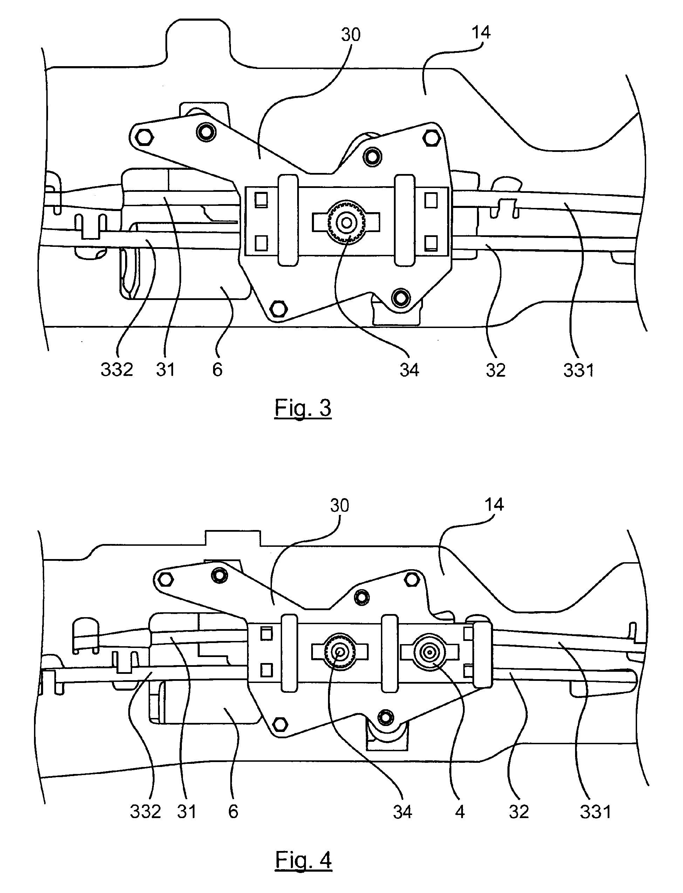

Les rails 141 et 142 sont parcourus par des câbles d'actionnement qui permettent de déplacer les extrémités 131 et 133 de la barre de tirage 13. La figure 3 représente un mécanisme d'actionnement des câbles 30 qui est porté par la partie du cadre 14 située à proximité du tube enrouleur 12. Les câbles d'actionnement 31 et 32 et le mécanisme d'actionnement des câbles 30 forment des moyens d'actionnement motorisés du store. On peut voir sur ces figures les portions libres des câbles 31 et 32, qui ne sont pas comprises entre le mécanisme d'entraînement 30 et les extrémités 131 et 132 de la barre de tirage.

Ces câbles 31 et 32 sont du type "push-pull" (de l'anglais : pousser-tirer), ce qui signifie qu'ils peuvent être utilisés pour actionner un mouvement aussi bien en traction qu'en compression. Leurs secondes extrémités, qui ne sont pas représentées sur la figure 3, sont solidarisées aux extrémités 131 et 132 de la barre de tirage 13. Les câbles circulent, entre le mécanisme d'actionnement 30 et les rails respectivement 141 et 142, dans des gaines de guidage, respectivement 331 et 332 qui, comme on peut le voir sur les figures 1 et 2, sont elles-mêmes portées par le cadre 14. Dans les rails 141 et 142, les câbles respectivement 31 et 32 sont guidés de façon à ne pas pouvoir s'échapper du rail, même lorsqu'ils sont sollicités en compression.

Le mécanisme d'actionnement des câbles 30 comporte un pignon d'engrenage 34 qui est actionné par un moteur électrique 6. Ce pignon d'engrenage 34 est en prise à la fois avec les câbles 31 et 32. Les câbles 31 et 32 comportent en effet, des pas de vis, ou des rainures le long de leur périmètre, qui leur permettent d'être en prise avec le pignon d'engrenage 34.

Il est à noter que les câbles 31 et 32 sont engagés dans le mécanisme d'actionnement 30 dans des sens différents, et que chacun de ces câbles est en prise avec un côté du pignon d'engrenage 34. Ainsi, le moteur électrique 6, en actionnant le pignon d'engrenage 34, peut pousser en même temps les deux câble 31 et 32, ou au contraire tirer en même temps ces deux câbles. Cet actionnement simultané des deux câbles 31 et 32 permet de s'assurer que la barre de tirage 13 sera poussée, ou tirée, de façon équilibrée à chacune de ses extrémités et qu'elle conservera ainsi une position équilibrée, sensiblement perpendiculaire à la direction du déroulement du store.

Les éléments décrits ci-dessus et représentés par les figures 1 à 3 appartiennent aussi bien à l'art antérieur qu'à un mode de réalisation de l'invention. Afin d'éviter que les charges imposées au moteur soit trop différentes entre la phase de déploiement du store et sa phase d'enroulement, l'invention propose de créer de nouvelles charges pour le moteur, appliquées sur le ou les câbles d'actionnement (ou au moins l'un des câbles), dans la phase d'enroulement, afin de tendre vers une uniformisation des charges du moteur dans ces différentes phases.

### Première solution : ajout de frottements

Un premier mode de réalisation possible de l'invention consiste à ajouter des frottements dans le système de coulissement de la barre de tirage 13 dans les rails 141 et 142. Ces frottements peuvent être mis en oeuvre soit au niveau du coulissement entre la barre de tirage et les rails, soit au niveau de la circulation des câbles 31 et 32.

Ainsi, il est possible, pour ajouter des frottements, de réduire le diamètre des gaines de guidage 331 et 332 afin d'augmenter les frottements des câbles 31 et 32 dans ces gaines. Un changement de matière des gaines peut également permettre d'augmenter les frottements dans le système.

Un changement de matière et/ou de diamètre des câbles peut également permettre d'augmenter les frottements entre les câbles et les pièces environnantes (notamment les gaines de guidage 331 et 332 et les rails 141 et 142). Enfin, il est également possible d'ajouter une zone spécifiquement affectée aux frottements contre le câble, afin d'ajouter des frottements.

Pour uniformiser l'effort demandé au moteur, il est également possible d'éviter que le ressort de rappel situé dans le tube enrouleur exerce une tension trop forte sur la toile et par conséquent, sur la barre de tirage. Pour cela, il est possible d'utiliser un ressort à force constante plutôt qu'un classique ressort dont la force de rappel est proportionnelle à l'allongement. Il est peut-être ainsi possible de diminuer la force de rappel du ressort quand la toile est intégralement déployée, et ainsi de tendre vers une uniformisation des forces demandées au moteur.

### Limites de ce premier mode de réalisation

Ce premier mode de réalisation ne permet qu'imparfaitement d'atteindre les objectifs de l'invention. Ainsi, il peut avoir pour effet, si les frottements et l'ajustement du ressort sont adaptés, d'éviter que le moteur électrique travaille "à vide" lors de l'enroulement de la toile. Cependant, une augmentation des frottements aura également pour conséquence que la force de travail demandée au moteur lors du déploiement du store sera plus importante. Il restera donc ainsi une grande disparité entre le travail demandé au moteur lors du déploiement et lors de l'enroulement du store.

De plus, cette solution aura pour conséquence une plus grande consommation d'énergie. Enfin, l'utilisation d'un ressort à force constante devrait être faite avec prudence pour maintenir en toutes circonstances un tendu convenable de la toile. En effet, quand une toile est déployée de façon horizontale, et si la toile utilisée est lourde, il faut, pour qu'elle soit tendue, une force de traction supérieure quand une plus grande surface de toile est déployée. L'utilisation d'un ressort classique à force de rappel proportionnelle à l'allongement n'est donc pas forcément inutile dans ce cas.

Les autres modes de réalisation proposés permettent de résoudre à la fois les inconvénients de l'art antérieur et les inconvénients apparus dans ce premier mode de réalisation.

### Deuxième mode de réalisation : ajout d'un ralentisseur à graisse

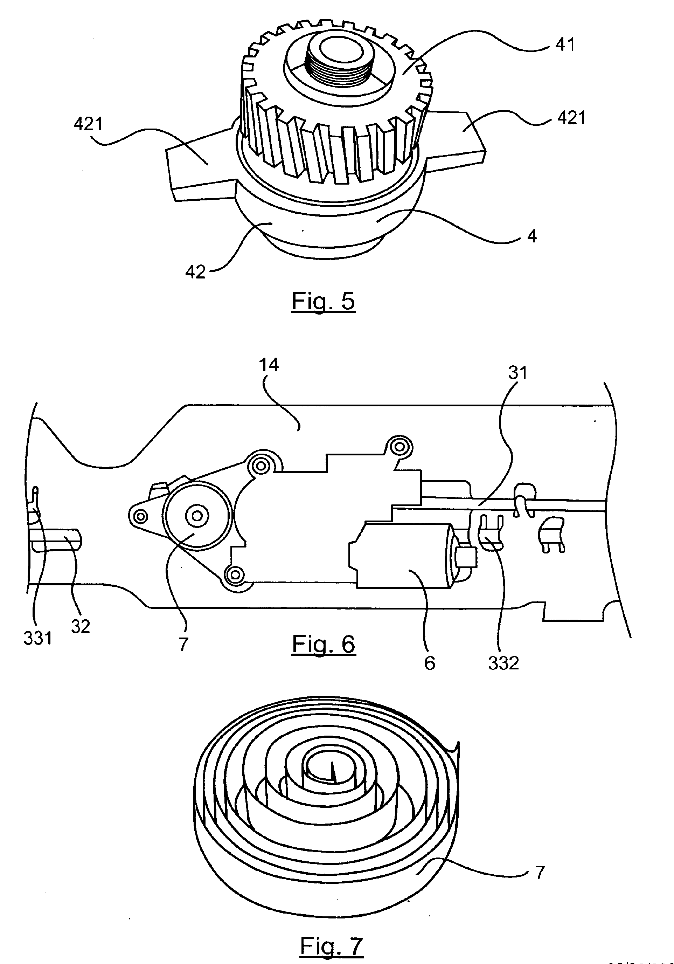

Dans un second mode de réalisation représenté par les figures 4 et 5, le mécanisme d'actionnement des câbles 30 est modifié afin d'y ajouter un ralentisseur à graisse 4. Un tel ralentisseur à graisse 4, bien connu de l'homme du métier, est représenté sur la figure 5. Il comprend un pignon d'engrenage 41, semblable au pignon d'engrenage 34, lié au moteur électrique, du mécanisme d'actionnement 30. Comme le montre la figure 4, le ralentisseur à graisse 4 peut avantageusement être placé entre les deux câbles 31 et 32, à côté du pignon d'engrenage 34 lié au moteur électrique. Ainsi, le pignon 41 peut, comme le pignon 34, être en prise à la fois avec les câbles 31 et 32.

À côté du pignon 41 se trouve un boîtier 42, qui comporte des pattes de fixation 421, permettant la fixation du boîtier au cadre 14. Dans le boîtier 42, des éléments, comme par exemple des pales, entraînés par le pignon d'engrenage 41 tournent, en même temps que le pignon d'engrenage, dans un bain de graisse. Les frottements engendrés par cette rotation dans la graisse ont pour effet de ralentir la rotation du pignon 41.

Le pignon 41 est lié aux éléments tournant dans la graisse par un embrayage unidirectionnel (non visible sur les figures). Un tel embrayage unidirectionnel, bien connu de l'homme du métier, permet de faire en sorte que le pignon puisse tourner librement dans un sens sans entraîner les éléments tournant dans le bain de graisse, et donc sans être ralenti. Au contraire, il entraîne les éléments tournant dans le bain de graisse, et est par conséquent ralenti, quand il tourne dans l'autre sens.

Ainsi, le ralentisseur à graisse 4 monté de façon appropriée à côté du pignon 34 lié au moteur électrique permet de faire en sorte que, lors du déploiement de la toile du store, le moteur électrique n'ait à fournir que la force nécessaire pour ce déploiement, le pignon 41 tournant de façon libre. Au contraire, lors de l'enroulement de la toile du store, le ralentisseur à graisse s'embraye, afin de ralentir cet enroulement. Ce ralentissement engendre une charge supérieure pour le moteur électrique, qui ne travaille alors plus en sous-charge.

Ce mode de réalisation permet donc une uniformisation de la charge du moteur entre les phases de dépliement du store et d'enroulement de celui-ci, sans pour autant charger de manière supplémentaire le moteur lors du déploiement. De plus, cette solution n'engendre aucun effet gênant pour l'aspect tendu de la toile, le freinage agissant au niveau de la barre de tirage et non au niveau du tube enrouleur du store.

Il est à noter que selon une variante de ce mode de réalisation, les pales tournant dans la graisse du ralentisseur peuvent être conformées pour opposer une résistance importante dans un sens de rotation et une résistance faible ou quasi-nulle dans l'autre sens de rotation. L'utilisation d'un embrayage unidirectionnel n'est alors plus nécessaire pour mettre en oeuvre l'invention.

### Troisième mode de réalisation : ressort à spire à la sortie du moteur

Un troisième mode de réalisation de l'invention est représenté sur les figures 6 et 7. La figure 6 représente l'envers de la portion d'un cadre 14 semblable à celui représenté sur la figure 4. On peut y voir les câbles 31 et 32 et les gaines de guidage 331 et 332, on peut également y voir le moteur 6 qui actionne le pignon d'engrenage 34 (non visible sur la figure 6).

Dans ce troisième mode de réalisation, le ralentisseur à graisse de la figure 4 a été remplacé par un système à ressort spiral. Ce système à ressort comporte un pignon d'engrenage non visible sur la figure 6, semblable au pignon d'engrenage 41 de la figure 4. Ce pignon d'engrenage est lié à une extrémité d'un ressort spiral tel que celui représenté sur la figure 7. L'autre extrémité de ce ressort spiral 7 est liée au cadre 14. Le système à ressort est installé de façon à ce que l'action du ressort s'oppose au mouvement des câbles entraînant l'enroulement de la toile du store, et qu'il tende à assister les mouvements des câbles tendant à déployer la toile du store.

Ainsi, quand la toile se déplie, le moteur qui doit fournir une charge importante pour contrer l'action du ressort de rappel situé dans le tube enrouleur, est aidé dans ce mouvement par l'action du ressort 7. Au contraire, quand la toile est enroulée, aidé par l'action du ressort de rappel situé dans le tube enrouleur, le moteur ne travaille pas en sous-charge dans la mesure où il doit lutter contre le ressort 7 pour le retendre.

Ce ressort 7 a donc pour effet de tendre vers une uniformisation de l'effort demandé au moteur électrique entre les phases de déploiement et d'enroulement de la toile, en accumulant de l'énergie lors du enroulement et en la restituant lors du déploiement. Pour optimiser cette uniformisation, il est possible de mettre en oeuvre un ressort 7 ayant des caractéristiques complémentaires de celles du ressort de rappel situé dans le tube enrouleur.

Enfin, cette solution n'implique aucun risque de détérioration de l'aspect tendu de la toile. En effet, l'action du ressort 7 se produit au niveau de la barre de tirage et non pas de l'enrouleur. De plus, le ressort 7 tend à écarter la barre de tirage de l'enrouleur, les deux ressorts exercent donc leurs actions sur la toile dans des directions opposées. Ce mode de réalisation permet donc, de façon avantageuse, de résoudre les inconvénients de l'art antérieur.

La présente invention peut s'appliquer à tous les stores ou occulteurs utilisés dans les véhicules automobiles, comme par exemple les stores de vitre latérales ou de pavillon arrière. Il s'applique plus particulièrement aux stores occultant des pavillons vitrés de véhicules automobiles, ou aux toiles de cache-bagage, qui s'étendent de façon horizontale. Ces stores nécessitent en effet, pour être tendus correctement, s'être tirés par des ressorts de rappel particulièrement puissant, ce qui peut aggraver les inconvénients présents dans l'art antérieur.

### Maintien de l'arbre du moteur

Les moteurs électriques 6 utilisés pour actionner des stores ou occulteurs des véhicules sont des moteurs de type courant, présentant un carter lié au stator du moteur et un arbre, ou arbre moteur, dont l'une des extrémités est liée au rotor du moteur et l'autre extrémité est libre. Cette extrémité libre est, lors du montage du moteur, reliée à un pignon d'engrenage 34 afin d'actionner le store.

Parmi les moteurs couramment utilisés, certains présentent des tolérances de jeu relativement importantes. Ainsi, leur arbre, lié au rotor du moteur, présente parfois un jeu, et son extrémité libre, qui devrait n'être mobile qu'en rotation autour de son axe de symétrie, est parfois mobile en translation sur quelques millimètres, dans la direction de cet axe de symétrie ou dans une direction perpendiculaire à celle-ci.

Ce jeu excessif peut avoir pour conséquence que le pignon d'engrenage 34 s'éloigne de la pièce (ou de l'une des pièces) avec laquelle il doit être en prise, et que des dents d'engrenage soient sautées pendant le fonctionnement du moteur. Ce jeu peut également entraîner, s'il est trop important, un patinage de l'engrenage.

Ce patinage ou ces sauts de dents sont très préjudiciables pour le système d'actionnement des stores ou occulteurs. En effet, ils peuvent causer une usure excessive des pièces d'engrenage. De plus, ils entraînent des à-coups disgracieux et désagréables dans le déploiement ou l'enroulement des stores ou des occulteurs.

Ces inconvénients pourrait être évités en utilisant des moteurs dont le jeu de l'extrémité libre de l'arbre est plus faible. Cependant, le coût des moteurs présentant un jeu suffisamment faible est beaucoup plus important que celui des moteurs utilisés couramment.

Afin d'éviter ces inconvénients à moindre coût, il a été imaginé par les inventeurs de mettre en place un système de maintien de l'extrémité libre de l'arbre du moteur du moteur. Ce maintien est fait d'une façon originale qui le rend particulièrement simple et peu coûteux à mettre en oeuvre (en particulier, sans utiliser de roulement), et n'engendre que de faibles frottements.

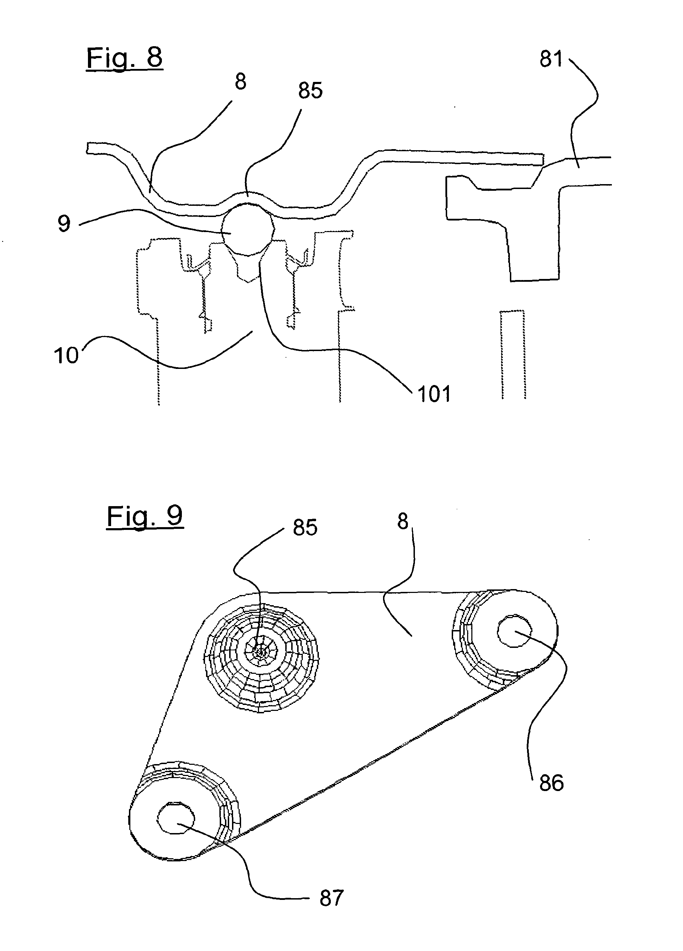

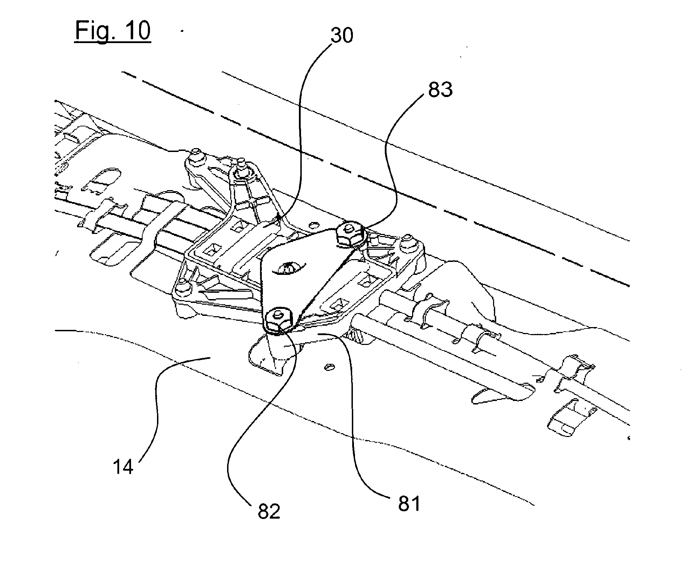

Ce maintien est effectué à l'aide d'une bride 8, représentée sur les figures 8 à 10. Comme le montre la figure 10, la bride 8 est fixée par l'intermédiaire de vis 82 et 83 passant dans des trous correspondants 86 et 87 de la bride, à un élément fixe 81 du mécanisme d'entraînement 30. Cette bride 8 vient recouvrir l'extrémité supérieure 10 de l'arbre moteur du moteur 6 ou, ce qui est équivalent, le pignon d'engrenage monté sur cette extrémité supérieure.

Comme le montrent les figures 8 et 9, la bride 8 comporte, dans l'axe de de l'arbre moteur, un renfoncement 85. L'extrémité 10 de l'arbre comporte également un renfoncement 101, situé face au renfoncement 85 de la bride 8. Ces deux renfoncements 85 et 101 sont destinés à maintenir une bille 9 entre la bride 8 et l'extrémité 10 de l'arbre moteur, alignée sur l'axe de rotation de ce dernier.

Selon un mode de réalisation avantageux, la bride 8 est montée de façon à être légèrement déformée par pour laisser la place à la bille 9. Ainsi, elle agit comme un ressort plaquant la bille 9 contre l'extrémité 10 de l'arbre moteur. L'action conjuguée de la bride 8 et de la bille 9 a pour effet de centrer l'extrémité 10 de l'arbre moteur, dont l'axe de rotation est maintenu de façon à passer par la bille 9 et le renfoncement 85 de la bride 8. De plus, la bride 8 a pour effet d'appuyer sur l'extrémité de l'arbre moteur et d'empêcher les mouvements de l'arbre dans la direction de son axe de rotation.

En revanche, le contact de cette bille 9 n'entraîne que peu de frottement lors de la rotation normale de l'arbre 10. L'ensemble formé de la bride 8 et de la bille 9 a donc pour effet de supprimer les jeux non souhaités dans l'arbre du moteur sans en altérer le fonctionnement.

Bien évidemment, un tel ensemble de bride et de bille pourrait être utilisé de la même façon pour tout autre mécanisme d'actionnement d'équipement de véhicule automobile mettant en oeuvre le même type de moteur.

## Revendications

1. Store à enrouleur pour véhicule automobile, comprenant une toile d'occultation (11) solidaire à une première extrémité d'un tube d'enroulement (12) portant des premiers moyens de rappel de ladite toile (11) dans une position dans laquelle ladite toile (11) est enroulée, et à une deuxième extrémité d'une barre de tirage (13),
les extrémités (131, 132) de ladite barre de tirage (13) étant guidées en coulissement dans des rails (141, 142) lors du déplacement de ladite toile (11) et entraînées par des moyens d'actionnement motorisés de ladite barre de tirage (13), comprenant au moins un élément de câble (31, 32),
**caractérisé en ce qu'**il comprend des moyens de ralentissement agissant sur au moins un desdits éléments de câble (31, 32), de façon à s'opposer au déplacement de ladite barre de tirage (13) lors de l'enroulement de ladite toile (11).

2. Store à enrouleur selon la revendication 1, **caractérisé en ce que** lesdits moyens de ralentissement sont agencés de façon à ne pas s'opposer au déplacement de ladite barre de tirage (13) lors du déploiement de ladite toile (11).

3. Store à enrouleur selon la revendication 2, **caractérisé en ce qu'**il comprend des moyens de liaison sélective entre lesdits moyens d'actionnement motorisés et lesdits moyens de ralentissement, assurant une liaison uniquement lors de l'enroulement de ladite toile (11).

4. Store à enrouleur selon la revendication 3, **caractérisé en ce que** lesdits moyens de liaison sélective comprennent un embrayage unidirectionnel.

5. Store à enrouleur selon la revendication 2, **caractérisé en ce que** lesdits moyens de ralentissement comportent des seconds moyens de rappel s'opposant à la force appliquée sur ladite toile (11) par lesdits premiers moyens de rappel.

6. Store à enrouleur selon l'une quelconque des revendications 1 à 4, **caractérisé en ce que** lesdits moyens de ralentissement comprennent un ralentisseur à graisse (4).

7. Store à enrouleur selon l'une quelconque des revendications 1 à 4, **caractérisé en ce que** lesdits moyens de ralentissement comprennent des moyens de frottement en contact avec au moins un élément desdits moyens d'actionnement motorisés.

8. Store à enrouleur selon l'une quelconque des revendications 1 à 7, **caractérisé en ce qu'**il est adapté pour au moins une des utilisations suivante :
• occultation d'une vitre latérale d'un véhicule automobile ;
• occultation d'une lunette arrière d'un véhicule automobile ;
• occultation d'un pavillon vitré d'un véhicule automobile ;
• cache-bagage ;

9. Véhicule automobile **caractérisé en ce qu'**il comprend au moins un store à enrouleur selon l'une quelconque des revendications 1 à 8.

## Claims

1. Roller blind for motor vehicle, comprising a screening canvas (11) integral with a first extremity of a roller tube (12) carrying first means for returning said canvas (11) to a position in which said canvas (11) is rolled up, and integral with a second extremity of a draw bar (13),
the extremities (131, 132) of said draw bar (13) being guided in such a way that they slide within rails (141, 142) when said canvas (11) is moved and drawn by motorised actuation means of said draw bar (13), comprising at least one cable element (31, 32), **characterised in that** it comprises slowing means acting on at least one of said cable elements (31, 32), in such a way as to oppose movement of said draw bar (13) while said canvas (11) is rolled up.

2. Roller blind according to claim 1, **characterised in that** said slowing means are devised in such a way that they do not oppose movement of said draw bar (13) when said canvas (11) is being unrolled.

3. Roller blind according to claim 2, **characterised in that** it comprises selective linkage means between said motorised actuation means and said slowing means, assuring linkage solely when said canvas (11) is rolled up.

4. Roller blind according to claim 3, **characterised in that** said selective linkage means comprise a unidirectional clutch.

5. Roller blind according to claim 2, **characterised in that** said slowing means comprise second return movement means which oppose the force applied to said canvas (11) by said first return movement means.

6. Roller blind according to any one of claims 1 to 4, **characterised in that** said slowing means comprise a greased retarder (4).

7. Roller blind according to any one of claims 1 to 4, **characterised in that** said slowing means comprise friction means in contact with at least one element of said motorised actuation means.

8. Roller blind according to any one of claims 1 to 7, **characterised in that** it is suitable for at least one of the following uses:
• Screening of a side window of a motor vehicle;
• Screening of a rear window of a motor vehicle;
• Screening of a glazed roof of a motor vehicle;
• Baggage screen.

9. Motor vehicle **characterised in that** it comprises at least one roller blind according to any one of claims 1 to 8.

## Patentansprüche

1. Rollo für Kraftfahrzeug, das eine Rollobahn (11) umfasst, die mit einem ersten Ende eines Wickelrohres (12) verbunden ist, welches erste Rückstellmittel der besagten Rollobahn (11) in einer Stellung trägt, in welcher die besagte Rollobahn (11) aufgrerollt ist, und die mit einem zweiten Ende einer Zugstange (13) verbunden ist, wobei die Enden (131, 132) der besagten Zugstange (13) während der Bewegung der besagten Rollobahn (11) verschiebbar in Schienen (141, 142) geführt sind und über motorische Antriebsmittel der besagten Zugstange (13) angetrieben sind, und die mindestens ein Kabelelement (31, 32) umfassen,
**dadurch gekennzeichnet, dass** es Mittel zur Verlangsamung umfasst, die auf mindestens eines der besagten Kabelelemente (31, 32) solcher Art wirken, dass sie entgegen der Bewegung der besagten Zugstange (13) beim Aufwickeln der besagten Rollobahn (11) wirken.

2. Rollo nach Anspruch 1, **dadurch gekennzeichnet, dass** die besagten Mittel zur Verlangsamung solcher Art angeordnet sind, dass sie nicht entgegen der Bewegung der besagten Zugstange (13) während der Abwicklung der besagten Rollobahn (11) wirken.

3. Rollo nach Anspruch 2, **dadurch gekennzeichnet, dass** es Mittel zur selektiven Verbindung zwischen den besagten motorischen Antriebsmitteln und den besagten Mitteln zur Verlangsamung umfasst, wobei eine Verbindung nur beim Aufwickeln der besagten Rollobahn (11) gewährleistet ist.

4. Rollo nach Anspruch 3, **dadurch gekennzeichnet, dass** die besagten Mittel zur selektiven Verbindung eine unidirektionale Kupplung umfassen.

5. Rollo nach Anspruch 2, **dadurch gekennzeichnet, dass** die besagten Mittel zur Verlangsamung zweite Rückstellmittel umfassen, die entgegen der durch die besagten ersten Rückstellmittel an der besagten Rollobahn (11) angreifenden Kraft wirken.

6. Rollo nach einem der Ansprüche 1 bis 4, **dadurch gekennzeichnet, dass** die besagten Mittel zur Verlangsamung einen Schmiermittel-Verlangsamer (4) umfassen.

7. Rollo nach einem der Ansprüche 1 bis 4, **dadurch gekennzeichnet, dass** die besagten Mittel zur Verlangsamung Mittel zur Reibung umfassen, die in Kontakt mit mindestens einem Element der besagten motorischen Antriebsmittel sind.

8. Rollo nach einem der Ansprüche 1 bis 7, **dadurch gekennzeichnet, dass** es für mindestens eine der folgenden Verwendungen ausgebildet ist:
• Abdeckung eines Seitenfensters eines Kraftfahrzeugs;
• Abdeckung eines Heckfensters eines Kraftfahrzeugs;
• Abdeckung eines verglasten Karosserieoberteils eines Kraftfahrzeugs;
• Gepäckabdeckung.

9. Kraftfahrzeug, **dadurch gekennzeichnet, dass** es mindestens ein Rollo nach einem der Ansprüche 1 bis 8 aufweist.
